# EUROPEAN PATENT SPECIFICATION

(11) **EP 2 206 940 B1**
(45) Date of publication and mention of the grant of the patent: **21.06.2017**
(21) Application number: 09000075.3
(22) Date of filing: 07.01.2009
(51) Int. Cl.: F16K 31/06, F04B 53/10, F01L 9/04

(54) **Valve actuator**
Ventilaktor
Actionneur de soupape

(43) Date of publication of application: 14.07.2010
(73) Proprietor: Danfoss Power Solutions Aps, 6430 Nordborg (DK)
(72) Inventor: Kuttler, Onno, Cousland/Dalkeith EH22 2PD (GB)
(74) Representative: Nestler, Jan Hendrik

(56) References cited:
- EP-A1- 1 199 501
- US-A1- 2005 067 596
- US-A1- 2007 272 890
- US-B1- 6 315 265

## Description

The invention relates to a valve actuator for actuating the valve part of an actuated valve. The invention further relates to a valve unit, comprising such a valve actuator. Additionally, the invention relates to a fluid working machine, using such a valve actuator and/or such a valve.

When a fluid inlet, a fluid outlet or an internal fluid port of a device has to be opened, closed or regulated in an automated way and/or in response to an external signal, actuated valves are the appropriate device for dealing with this task.

Such actuated valves are widely used, e.g. in engines of motor vehicles, where the actuation signal is normally applied by mechanical transmission using a camshaft. However, the use of actuated valves is not restricted to engines. In the meantime, for example, actuated valves are also used in fluid working machines, such as in hydraulic motors and particularly in hydraulic pumps.

A relatively new approach for building hydraulic machines (i.e. hydraulic pumps and hydraulic motors) are the so called synthetically commutated hydraulic pumps, also known as digital displacement pumps. They are a subset of variable hydraulic machines. One of the major advantages of synthetically commutated hydraulic machines is their energy efficiency, as well as their ability to quickly adapt to rapidly changing hydraulic fluid flow demands.

The difference between a synthetically commutated hydraulic pump and a standard hydraulic pump basically lies in the replacement of the normally passive fluid inlet valves, fluidly connecting the hydraulic fluid inlet manifold to the pump's cyclically changing pumping cavity, by actively controlled actuated valves..For performing a pumping function, it is sufficient to replace the passive low pressure fluid inlet valves by actuated valves, while the high pressure valves may continue to be passive valves.

A synthetically commutated hydraulic pump can be operated in a full stroke pumping mode, a part stroke pumping mode and an idle mode:

In the full stroke pumping mode, the actuated fluid inlet valves are controlled in a way, similar to the opening and closing behaviour of passive valves that are opening and closing under the generated pressure differences caused by the fluid flow in standard hydraulic pumps.

In the idle mode, the actuated fluid inlet valves remain open throughout the whole pumping cycle. During the expansion phase of the hydraulic pump's pumping cavity, hydraulic fluid is sucked into the pump's expanding pumping cavity. When the pumping cavity eventually starts to contract, the hydraulic fluid is ejected through the still open orifice of the fluid inlet valve, back towards the pump's low pressure side.

In the part stroke pumping mode, the actuated fluid inlet valve initially remains open, when the contracting cycle of the pumping cavity starts. There-fore, initially the hydraulic fluid is ejected back towards the low pressure side of the pump. At a certain point during this contraction phase, however, the actuated fluid inlet valve will be closed by a signal of the hydraulic pump's controller. Starting at this point, the way back to the low pressure side is blocked for the hydraulic fluid, still remaining within the pump's pumping cavity. Consequently, the fluid will how be ejected towards the high pressure side of the hydraulic pump. Due to this "late closing" of the fluid inlet valve, only a fraction of the pump's cyclically changing volume of the pumping cavity is used for pumping towards the high pressure side. Therefore, the pumping performance can be adapted to the actual need for hydraulic fluid. This adaption can be done extremely fast. Normally the fluid output flow can be changed from one pumping cycle to the next.

Although the working principle of synthetically commutated hydraulic pumps has been described with reference to a single piston pump, a synthetically commutated hydraulic pump can be constructed with a plurality of cylinders as well.

Furthermore, if the passive high pressure valves are replaced by actuated valves as well, a motoring mode can be implemented by a corresponding actuation of the high pressure valves and low pressure valves. This motoring mode cannot only be performed in a full stroke motoring mode, but also in a part stroke motoring mode, if the fluid inlet valves and the fluid outlet valves are actuated during the contraction phase and/or expansion phase of the hydraulic pump's cavity accordingly.

Particularly the part stroke pumping mode necessitates an exact timing of the opening and closing movements of the valves. Furthermore, the time needed to open and/or to close the valves has to be very short. In particular, the speed of the opening and/or the closing movement of the valves has to be higher as compared to existing pumps, and the timing has to be more accurate.

In standard hydraulic pumps, the opening and the closing of the valves takes place solely at the top dead center (TDC) and the bottom dead center (BDC) of the piston. At these points, the velocity of the fluid, flowing through the valve's orifice, is zero, or is at least close to zero in practical embodiments.

In the synthetically commutated hydraulic machine concept, however, at least part of the opening and/or closing movement of the valve takes place somewhere between the TDC and BDC of the piston, where the velocity of the fluid passing through the valve's orifice can be substantial. Hence, even a small deviation of the actual closing time as compared to the desired closing time can result in a substantial deviation of the actual fluid output flow rate as compared to the currently required fluid flow rate. Furthermore, due to the high fluid velocity, a slow closing action of an actuated valve can lead to undesired noise and even to cavitation effects, resulting in an increased wear and a potential damage of the valve and the valve seat.

Because of these very stringent requirements, solutions which work well in the technical area of valve actuation for combustion engines are normally not suited for the technical field of synthetically commutated hydraulic pumps.

Usable actuated valves have been proposed e.g. in US 2005/0067596 A1. Although this design works in principle, it still suffers from serious drawbacks. One problem is the high demand of electrical energy to move the actuated valve into its closed position. This is particularly true for the initial acceleration phase of the valve. Another drawback is the permanent magnet. In the actual design, currently realised by the inventors of US 2005/0067596 A1, the permanent magnet consists of NeFeB. These magnets are known to have a limited temperature range and are susceptible to brittle. This is problematic when considering the repetitive impact of the valve head onto it's valve seat, when the valve is closing. Furthermore, the long term behaviour of the magnet when its magnetic field is repetitively cancelled by the smaller magnetic coil in this design remains an open question. Also, the recycling of the valve might proove to be problematic.

Another approach to solve the problem was suggested by Gandrud in US 7,300,260 B1. Here the use of a magnetorheological or a electror-heological fluid instead of actuated mechanical valves is proposed. This approach, however, severely limits the range of usable hydraulic fluids. Also, tightness issues and/or an increased wear are present. Nevertheless, this approach clearly shows that currently available valves are still unsatisfying.

Particularly in the remote technical field of combustion engines the use of mechanical energy storing units for valve actuators is known as such. For example, in US 6,315,265 B1, a valve timing actuator that allows the opening and closing of engine valves to be variably and individually controlled without using a camshaft is disclosed. The valve timing actuator utilises energy regeneration using potential energy storage devices such as springs. For this, spring seats are moved in relation to the valve to "charge" the energy storing springs with respect to the valve. During the "charging" of the energy storing springs, the valve is held in place by latching sprags. The latching sprags are actuated by a latching piston, which is actuated by pressurised fluid, which is delivered to a latching piston input chamber and/or a latching piston output chamber of the latching piston, so that the latching piston can be moved in an axial direction. Generally speaking, solutions for valve actuators in the technical field of combustion engines usually cannot be used in the technical field of fluid working machines (particularly hydraulic fluid working machines, especially synthetically commutated hydraulic machines). This is because the fluid, used in fluid working machines is usually significantly more viscous than the gases present in combustion engines. Therefore, in fluid working machines the fluid flow cross-sections as well as the actuation strokes of the valve actuators have to be much larger. Furthermore, the timing accuracy and the actuation speed of the valve actuators have to be very high in fluid working machines. This is particularly true for synthetically commutated hydraulic machines, where a valve actuation can take place anywhere between the bottom dead centre at the top dead centre of the piston.

In US patent application US 2007/0272890 A1, a valve, comprising an electromagnetic actuator and a solenoid is disclosed. The solenoid includes at least one core and an anchor plate. The solenoid further comprises at least one coil that is disposed within the core and connected to a set of power electronics to supply current to the coils. The actuator further comprises a plunger connected to the anchor plate and at least one spring configured to guide the plunger. The opening and closing of the valve is controlled by passing current through the coil.

In the technical field of turbines, in EP 1 199 501 A1 an actuator for a valve is disclosed, comprising a valve spindle for adjustment of an opening position of the valve, and a driving part. The driving part is connected to the valve spindle by a storage device, which may be pre-tensioned to a particular pre-tensioned value during a pre-tensioning process in such a manner that with a pre-tensioned storage device the opening position can be set without altering the value of the pre-tensioning.

The object of the present invention is to provide for an improved valve actuator, particularly suited for synthetically commuted hydraulic pumps. Another object of the invention is to provide for an improved valve unit. Yet another object of the invention is to provide for an improved fluid working machine.

It is suggested to design a valve actuator, comprising at least one driving means for driving a valve to be actuated by said valve actuator and at least one triggering unit for triggering a movement of said driving means to open and/or to close said valve, wherein said triggering unit is a directly driven triggering unit, converting an input signal directly into a triggering signal of said triggering unit to generate a force that directly triggers a movement of said driving means, and wherein at least one mechanical energy storing unit is provided for actuating said triggering unit and/or said driving means, in a way that at least one preloading means for preloading said mechanical energy storing unit is provided, wherein said preloading means and said driving means are separate components. Using such a mechanical energy storing unit it is possible to provide for the energy eventually needed to actuate the triggering unit and/or the driving means, over an elongated time interval. Additionally or alternatively, it is possible to store energy that is taken from the triggering unit and/or the driving means itself, particularly during certain phases of the working cycle of the valve actuator. As an example, while for the opening movement of the actuated valve external energy is needed, energy might be set free during the closing movement of the actuated valve. The energy, accumulated within the mechanical energy storing unit (which is possibly accumulated of an elongated time span), can be released quickly at the desired time. It is usually particularly advantageous, if a preferably large fraction of the mechanical energy, stored in the mechanical energy storing unit, is released in the very
beginning of the movement of the triggering unit and/or the driving means. This way, it is possible to make the response of the driving means to the triggering signal faster. Additionally or alternatively, it is possible to decrease the power, which has to be provided at the time of the actuation of the driving means. Therefore, it is possible to use a simpler and more cost-effective design of at least some of the components of the valve actuator. Furthermore it is possible to use different sources of energy for the triggering signal of the triggering unit and for the loading of the energy storing unit. This can further simplify the design of the valve actuator. Furthermore, overall energy consumption can be decreased as well, particularly when considering a certain energy form. It is even possible that the waste energy of a certain system can be used to trigger the triggering unit and/or to load the mechanical energy storing unit at least in part. By the notion "directly driven triggering unit", in particular a unit is meant, where the triggering signal, which normally is present in form of a mechanical signal and/or an electrical signal, is directly converted into a change of state of the triggering unit, which finally results in a movement of the driving means. In this context, electrical and magnetical energy forms can usually be considered to be a single energy form, i.e. as the electromagnetic energy form. By such a construction, usually a particularly fast, timely and reliable movement of the driving means can be assured. By "directly driven", an amplifier, a filter or a similar device is not necessarily excluded. Instead, "directly driven" usually refers to a system, where the energy form remains at least substantially unchanged and/or unmodified. Of course, the presently suggested valve actuator can be used to actuate the actuated valve in any possible way. Hence, any sensible part of the actuated valve (or even several parts of the actuated valve) can be actuated by the valve actuator (and/or by a plurality of valve actuators). As an example, a valve typically comprises a valve cone and a valve seat. Therefore, the valve actuator can either actuate the valve cone, the valve seat or both.

Preferably the valve actuator is designed in a way that said triggering unit comprises at least one magnetic field generating means, in particular a magnetic coil. By such a design, electrical signals can be used for triggering the directly driven triggering unit, i.e. the electrical signals can be directly converted into a magnetic field, which in turn can generate a force, triggering a movement of the driving means. Particularly in the field of hydraulic fluid working machines, even more particularly in the field of synthetically commutated hydraulic pumps, but also in other technical fields, usually an electronic controlling unit is already present. Such an electronic controlling unit can easily take over the control of the actuation of the actuated valves as well. Quite often, the actuation of the actuated valves is already performed by an electronic controlling unit. Using an electronically controlled actuation of the actuated valves, normally a particularly fast, cost-effective, timely and energy-conserving actuation can be assured. The magnetic field generating means, in particular the magnetic coil can comprise a magnetic core and/or a magnetic yoke, preferably manufactured from a soft-magnetic material.

As already stated, the valve actuator comprises at least one preloading means for preloading said mechanical energy storing unit. While it is possible that the mechanical energy storing unit is loaded e.g. by the driving means of the valve actuator itself during certain phases of the working cycle of the valve actuator, it is presently suggested that the preloading of the mechanical energy storing means is done at least in part by a separate component. This does not necessarily mean that the preloading means is a special component, provided solely for preloading the mechanical energy storage unit. Instead, it is possible that the preloading means serves an additional purpose as well. For instance, a magnetic coil (or a different device) could be provided, which serves as a triggering unit as well as a preloading means. However, the different purposes will usually be served at different times. The preloading means can use any energy form. However, experiments have shown that particularly for using the valve actuator in connection with hydraulic fluid
working machines, preferably with synthetically commutated hydraulic machines, electrical energy and pressure energy (e.g. provided by pressurised hydraulic fluid) usually show the best results. Using electrical energy for driving the preloading means, a magnetic field generating device, preferably a magnetic coil can be used to generate a force to preload the mechanical energy storage unit.

Another preferred embodiment of a valve actuator can be achieved, if said triggering unit comprises a plurality of magnetic field generating means, in particular at least one triggering magnetic field generating means for triggering the movement of said driving means and/or at least one loading magnetic field generating means for preloading said mechanical energy storage unit. Using such a plurality of magnetic field generating means, it is possible to optimise the respective field generating means better for its intended purpose or its intended purposes. It is even possible that for each purpose one and/or even several magnetic field generating devices are provided. When using a plurality of magnetic field generating devices, it is usually also possible to design the resulting magnetic field generating devices smaller, lighter, more cost-effective and/or less power-consuming.

It is also possible to design the valve actuator in a way that the mechanical energy storing unit comprises at least one device, taken from the group containing springs, metal springs, elastic material, rubber, hydraulic energy storage devices and gas pressure elements. Using one or several of these devices usually results in a cheap and reliable device, showing good performance. Particularly when using a spring (e.g. a coil spring), it is also possible to design the device in a way that it shows a non-linear connection between exerted force and distance of deformation. Thus the device can be even more optimised for its purpose. With an adapted connection between exerted force and distance of deformation it is possible, for example, to provide for a zero pumping rate of a hydraulic working machine, in case the controller and/or the energy for driving the actuated valves fails. On the other hand it is also possible to provide for a fail-safe mode, providing a certain pumping rate in this case. This is particularly sensible for critical applications, e.g. for a power steering or the like.

Furthermore it is suggested to provide a valve actuator with at least one dampening means, in particular at least one dampening spring. Due to the high speed that certain parts of the valve actuator can have, particularly when using the accelerating force of the mechanical energy storage unit, an increased wear can result, when the respective parts reach their end positions. To slow down the parts more smoothly, the proposed dampening means can be used. It is noticed that the dampening means and the mechanical energy storage unit can even fall together. With such an embodiment, energy can even be recycled for the next working phase of the valve actuator. Of course, the dampening elements can also be taken from the group containing springs, metal springs, elastic material, rubber and hydraulic energy storage devices.

Another variation of the valve actuator can be realised when at least one additional force generating means for generating an additional force for said triggering unit, said driving means and/or said mechanical energy storing unit is provided. By designing the valve actuator in this way, it is possible to further enhance the speed and accuracy of the actuation movement of the valve actuator. For example, in addition to one first force generating device for the triggering unit and one second force generating device for the mechanical energy storing unit, a third force generating device, applying an additional force on the mechanical energy storing unit can be provided for. This way, the preloading of the mechanical energy storing unit can be performed faster and/or to a more energy-rich state. Although it is possible that the additional force generating means (in the aforementioned example, the third force generating device) relies on the same energy form as the basic force generating means for the same device (in the aforementioned example, the second force generating device), it is preferred that they rely on different energy forms. For example, the second force generating device could rely on electricity (electromagnetic energy form), while the third force generating device could rely on fluid pressure. This way, a redundant system can be provided.

Yet another modification of the valve actuator can be realised, if at least one of said additional force generating means is using at least in part pressurized fluids and/or magnetic fields for generating said additional force. It has to be noted that in several applications, there is a return flow of a fluid at a still elevated pressure. This pressure can hence be used to perform useful work, instead of being simply dumped into a storage tank at ambient pressure. An example of such a system is a power steering. Using magnetic fields for generating said additional force, in particular electricity can be used to control said magnetic fields. Electricity, however, can easily be controlled using standard devices.

The valve actuator can be further modified in that at least one of said additional force generating means comprises at least one controlling means, which is controlled at least in part by the movement and/or actuation of said triggering unit, said driving means, said preloading means and/or said mechanical energy storing unit. Usually, at least some parts of the valve actuator will show a mechanical displacement during the working cycle of the valve actuator. This already present displacement can be preferably used for controlling the preloading of the mechanical force generating means via the proposed controlling means. For this purpose, appropriate recesses can be provided, for example. This way, a very simple, cost-effective and reliable controlling system can be realised.

Preferably said controlling means comprises at least one device, taken from the group containing mechanical latching devices, fluid pressure applying devices and/or electricity controlling devices. Experiments have shown that in particular said devices perform very well as controlling means.

A preferred embodiment can be realized, if the valve actuator comprises an additional force generating means and/or a mechanical energy storing unit that is designed as a periodical force generating means, as a cyclically operating force generating means, as a periodical mechanical energy storing unit and/or as a cyclically operating mechanical energy storage unit. This way it is possible to design the force generating means and/or the mechanical energy storing units relatively simple. In particular, due to the repetitive nature of the applying force as well as of the charging force, charging the additional force generating means and/or the mechanical energy storing unit, said additional force generating means and/or said mechanical energy storing unit generally does not have to bridge elongated time intervals. Thus in particular devices can be used, which lose their stored energy relatively quickly with time. Another aspect of the repetitive nature is that the respective device usually does not have to store an excessive amount of energy, because it is well known, when the next charging step will occur. This is different to nonrepetitive environments, where it is not clear how many discharging steps will occur before the next charging step comes up, for example. Also, due to the repetitive nature of these devices, the resulting valve actuator is particularly well-suited for machinery, having a repetitive operating nature. For example, such valve actuators can be used for valves, used in fluid working machines.

Furthermore it is suggested, to provide a valve unit, in particular a valve unit for a hydraulic working machine, with at least one valve actuator according to the preceding suggestions. Such a valve unit can be modified analogously and will show the already mentioned effects and advantages in a similar way.

Also, a fluid working machine is suggested that is provided with at least one valve actuator according to the preceding description and/or at least one valve unit according to the preceding description. The notion "fluid working machine" comprises in particular fluid pumps, fluid motors, hydraulic pumps, hydraulic motors, pressurised gas pumps, pressurised gas motors and combinations thereof. The resulting device can be modified similarly to the already given description and will show the already mentioned effects and advantages in a similar way.

Furthermore it is suggested to design such a fluid working machine at least partially as a hydraulic working machine, preferably as a synthetically commutated hydraulic machine. Especially for synthetically commutated hydraulic machines, the above mentioned actuated valves and/or valve actuators are especially well suited. This is, because particularly synthetically commutated hydraulic machines (pumps, motors and combinations thereof) need very fast and accurately working actuated valves for functioning properly. However, this can be assured with the design proposed above. As already mentioned, synthetically commutated hydraulic pumps are also known as digital displacement pumps. In this context an additional statement about the functionality of a valve actuator used in a synthetically commutated hydraulic machine should be made. For this it is necessary to understand the pumping cycle of a synthetically commutated hydraulic machine; so some additional comments are made in the following. Usually, as soon as the inlet valve is closed during the exhaust stroke pressure builds up and holds the inlet valve closed. The actuator of the valve usually only has to close the inlet valve initially - once closed it is usually held closed, at least in part, by the pressure in the pumping chamber and can usually only open after top dead centre, when the pressure has decreased again.

Further advantages, features, and objects of the invention will be apparent from the following detailed description of the invention in conjunction with the associated drawings, wherein the drawings show:
Fig. 1: A schematic drawing of a first embodiment of a valve actuator in different positions;
Fig. 2: a schematic drawing of a second embodiment of a valve actuator in different positions;
Fig. 3: a schematic drawing of a third embodiment of a valve actuator in different positions;
Fig. 4: a schematic drawing of a fourth embodiment of a valve actuator;
Fig. 5: a schematic drawing of a possible embodiment of a commutator disc for the valve actuator shown in figure 4;
Fig. 6: a schematic drawing of a synthetically commutated hydraulic machine, comprising the first embodiment of a valve actuator.

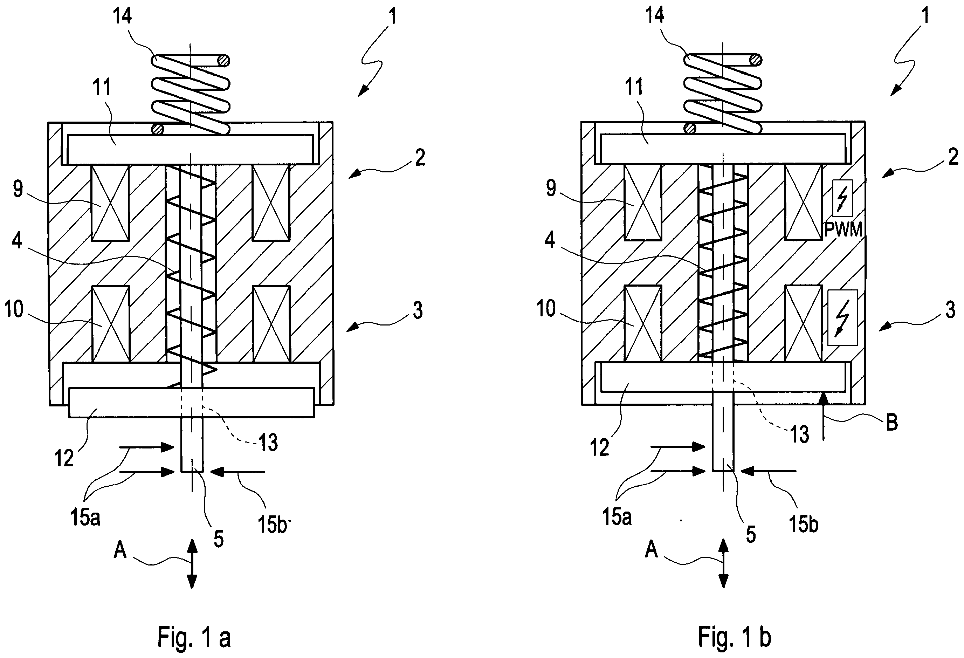

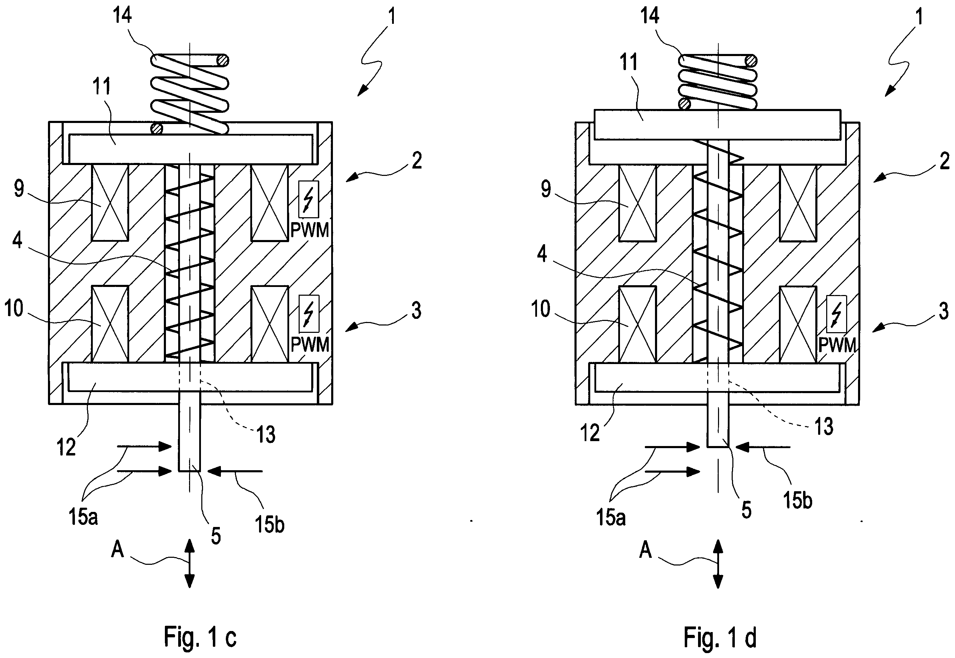

In Fig. 1 a first embodiment of a valve actuator 1 is shown in a schematic cross section. In the embodiment shown, the valve actuator 1 is designed with a rotationally symmetric shape. However, different designs are equally possible.

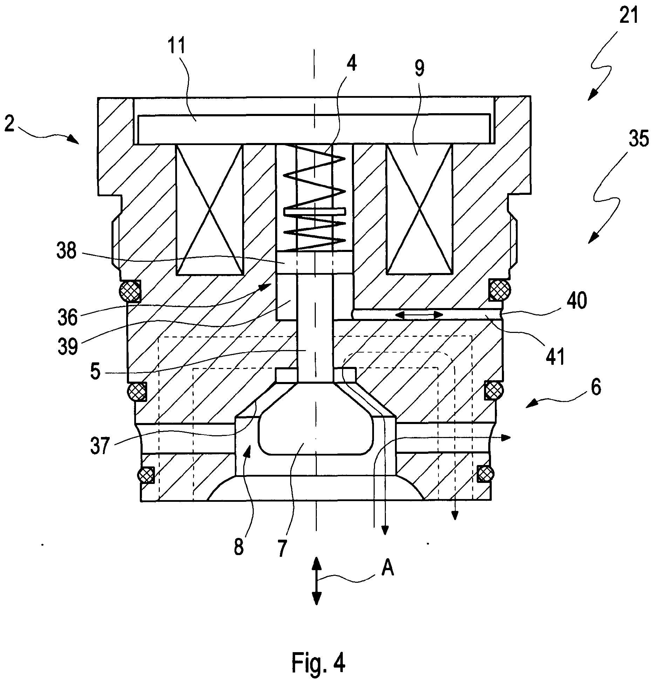

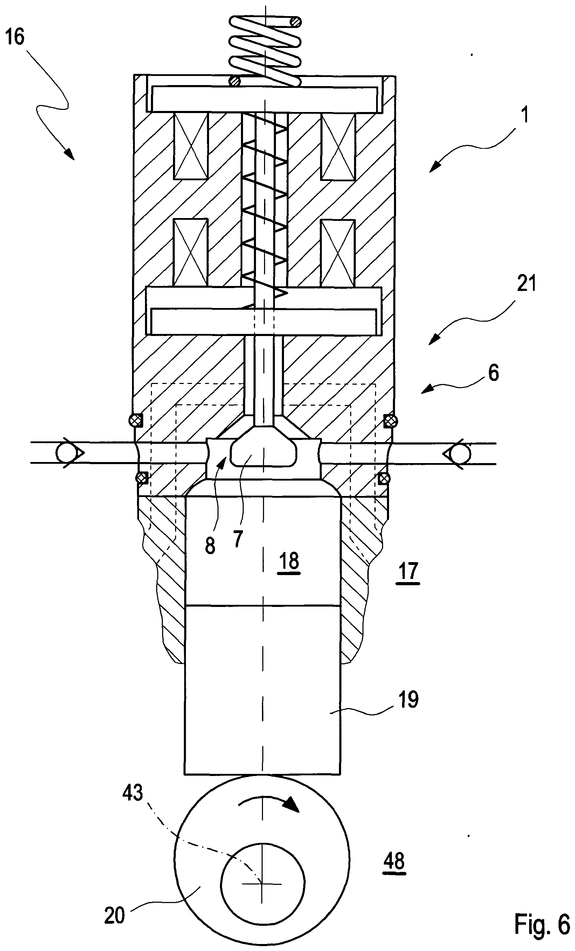

The valve actuator 1 comprises a driving section 2 for directly driving a valve stem 5, which can connect to a fluid influencing part 6 (see Figs. 4 and 6), e.g. for moving a poppet head 7 of a poppet valve 8. Thus, an actuated valve 21 can be realized.

In the embodiment, shown in Fig. 1, both the driving section 2, as well as the loading section 3 of the valve actuator 1 are electrically driven. More detailed the respective electric current for actuating the driving section 2 and the loading section 3 is fed into an appropriate electrical coil 9, 10 (driving electrical coil 9 and loading electrical coil 10) of the driving section 2 and the loading section 3, respectively. Within the electrical coil 9, 10, a magnetic field is generated, which is acting on an axially movable disc 11, 12 (driving disc 11 and loading disc 12) of the driving section 2 and the loading section 3, respectively. If an electric current is applied to one or both of the electrical coils 9, 10, the respective axially, movable disc 11, 12 experiences an attractive force towards the electrical coil 9, 10, due to the magnetic field generated by the electrical coil 9, 10.

The axially movable disc 11 of the driving section 2 is fixedly attached to the valve stem 5. Therefore, the valve stem 5 and the driving disc 11 of the driving section 2 always move together. Contrary to this, the axially movable loading disc 12 of the loading section 3 is slidingly movably connected to the valve stem 5. In other words, a hole 13 is provided in the loading disc 12 so that the valve stem 5 and the loading disc 12 can move freely against each other in an actual direction A.

Between the driving disc 11 and the loading disc 12, an energy storage spring 4 is provided. The function of the energy storage spring 4 will become clear from the following description. In the present embodiment, the energy storage spring 4 is designed as a coil spring, made of flexible steel material.

In addition to the energy storage spring 4, a reopening spring 14 is provided, which is connected to the driving disc 11. The reopening spring 14 generates a biasing force, pushing the driving disc 11, and hence the valve stem 5, in the direction of a lower position. If the valve actuator 1 is connected to a poppet valve 8 as seen in Fig. 4, this corresponds to an open position of the poppet valve 8. Depending on the actual use of the valve actuator 1, it is also possible that the reopening spring 14 can be omitted.

In the four sketches a through d of Fig. 1, an actuation cycle of the valve actuator 1 is illustrated.

In Fig. 1, the position of the valve stem 5 can be particularly seen from the arrows 15, drawn at the lower end of the valve stem 5. The left arrows 15a on the left side of the valve stem 5 indicate the upper and the lower position of the valve stem 5, while the right arrow 15b on the right side indicates the actual position of the valve stem 5. If the valve actuator 1 is connected to a poppet valve 8, similar to the situation shown in Fig. 4, this would correspond to an open position of the poppet valve 8.

In Fig. 1a, the valve actuator 1 is in its first position, in which the driving section 2 and the valve stem 5 are in their lower position. The driving section 2 is in the lower position, although its electrical coil 9 (driving electrical coil 9) is switched off (no electric current going through driving electrical coil 9). This is because of the biasing force of the reopening spring 14 and presumably due to fluid forces, generated by the fluid flowing through a valve 8, which is connected to the valve actuator 1.

The loading electrical coil 10 of the loading section 3 is switched off as well (no electric current going through loading electrical coil 10). Therefore, the loading disc 12 of the loading section 3 will be pushed into its lower position under the influence of the energy storage spring 4. Of course, the movement of the loading disc 12 is limited by an appropriate means, for example by a limiting projection (not shown), which can be provided on the valve stem 5 and/or on the body of the valve actuator 1.

In Fig. 1b, the loading phase of the valve actuator 1 is shown. In this position, the valve stem 5 of the valve actuator 1 will remain in its lower position, so that a poppet head 7 of a poppet valve 8 (see Figs. 4 and 6) will remain in its open position. This corresponds to a suction phase of the synthetically commutated hydraulic machine 16 (shown in Fig. 6), in which hydraulic fluid is sucked in from a low pressure reservoir 17 into a pumping chamber 18 of cyclically changing volume.

The variation of the volume of the pumping chamber 18 is performed by a piston 19, which is moved back and forth by interaction with a crankshaft 20. In a synthetically commutated hydraulic machine 16, the actuated valve 21, may remain in its open position even during an upward stroke of the piston 19, i.e. during a contraction phase of the pumping chamber 18. If the actuated valve 21 will remain open for the entire cycle, an idle mode of the synthetically commutated hydraulic machine 16 is achieved, in which hydraulic fluid is simply moved back and forth out of the and into the low pressure fluid reservoir 17. If the actuated valve 21 is closed during a middle position of the contracting cycle of the pumping chamber 18, a part stroke mode is achieved, so that the synthetically commutated hydraulic machine 16 runs only at a fraction of its full pumping capability.

During this lower position of the driving section 2 (open position of actuated valve 21), there is usually enough time to load the energy storage spring 4 with mechanical energy. In the present embodiment, this is done by applying an electric current to the preloading electrical coil 10 of the loading section 3. The electric current through the loading coil 10 will generate a magnetic field, which will generate an attractive force on the loading disc 12. This force is visualized by arrow B in Fig. 1 b. Since the loading electrical coil 10 comprises a certain inductivity, the application of an electric voltage will cause the electric current to rise slowly over time. However, the synthetically commutated hydraulic machine 16 will remain in the suction phase for a long time as compared to the time constant of the loading electrical coil 10, even at high RPM. Therefore, there is sufficient time for the electric current to reach its desired level.

By the upward movement of the loading disc 12 (wherein the driving disc 11 will remain in its lower position), the energy storage spring 4 will be compressed, thus storing mechanical energy therein.

As can be seen from Fig. 1b, an electric current is also applied to the driving electrical coil 9 of the driving section 2. This way the driving disc 11 will be held in place. Due to the nature of the attractive force of the magnetic fields, generated by the driving electrical coil 9 and the loading electrical coil 10, a relatively small electric current is needed for holding the respective disc 11, 12 in a latched position, whereas a relatively large electric current is needed for accelerating the respective disc 11, 12 out of its distant position towards its latched position. This is indicated by the different size of the electrical flashes, drawn in Fig. 1b. A reduced electric current can be realized by pulse width modulation, which is indicated by the letters PWM in Fig. 1b (as well as in Figs. 1c and d).

In Fig. 1c, the valve actuator 1 is shown in a state, in which both the driving disc 11 and the loading disc 12 are in their latched position, i.e. the driving disc 11 is in its lower position while the loading disc 12 is in its upper position. Since both disc 11,12 are in their latched positions, the electric current through both electrical coils 9,10 can be reduced to a "latching level", in which the attractive force is just enough to hold the respective disc 11,12 in its latched position. This way electrical energy can be saved which is clearly of advantage. It has to be noted that the valve actuator 1 will usually stay in the position, shown in Fig. 1c for an elongated time. Therefore, the savings in electrical energy can be substantial. The reduction in electrical current can be done by pulse width modulation, as already mentioned.

If the driving section 2 of the valve actuator 1 has to be moved into its upper position (to close the poppet valve 8 of the synthetically commutated hydraulic machine 16, for example), the driving electrical coil 9 can be simply switched off (see Fig. 1d). The electric current through the loading coil 10, however, will remain at its "latched level". This way, the mechanical energy, stored in the energy storage spring 4 will force the driving disc 11, and therefore the valve stem 5, into its upper position. By using an energy storage spring 4 with a relatively high spring constant, the time necessary for the movement of driving disc 11 can be made very small.

In Fig. 1d, the result of this upward movement of the driving disk 11 is shown. In this position, the poppet valve 8 will be closed, if the valve actuator 1 is connected to a fluid influencing part 6, as shown in Fig. 4 or Fig. 6.

If the electric current through the loading coil 10 will be switched off as well, the loading disc 12 will return to its lower position. This way, the tension of the energy storage spring 4 will be lowered to an extend, that the biasing force of the reopening spring 14 will overweigh the remaining force of the energy storage spring 4. Therefore, the driving disc 11, and hence the valve stem 5 will return to its lower position. This way the valve actuator will return to its position, as seen in Fig. 1a, thus completing the actuation cycle.

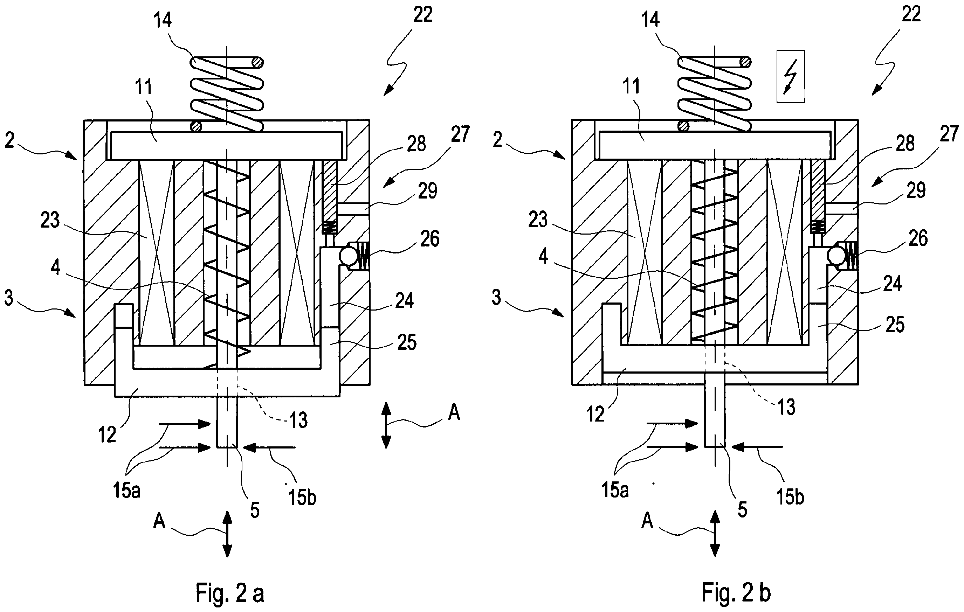

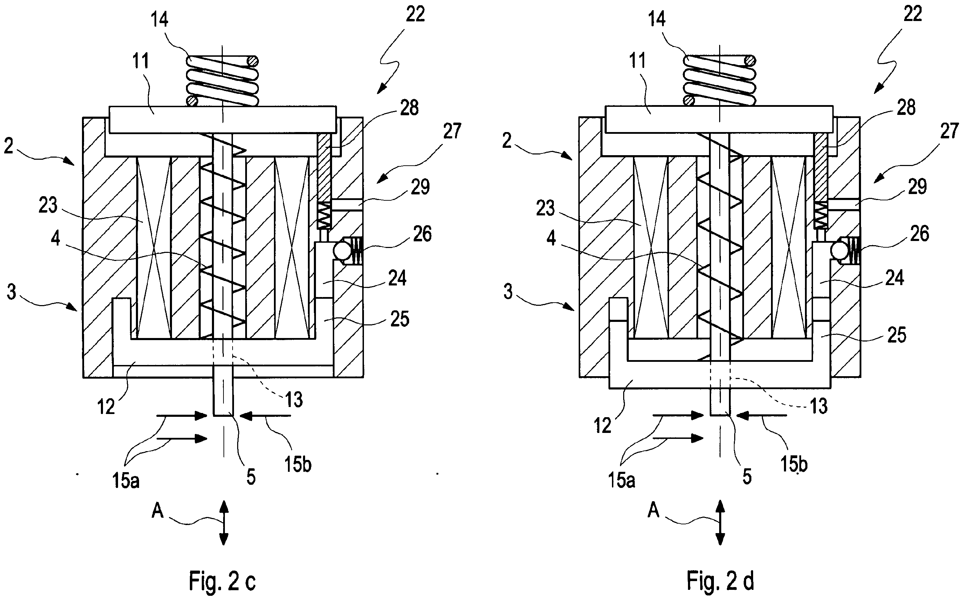

In Fig. 2, a modified valve actuator 22 is shown in a schematic cross section. Similar to Fig. 1, the valve actuator 22 is shown in different positions of its working cycle (see Figs. 2a to 2d).

The valve actuator 22 is designed with a single electrical coil 23. This simplifies the design of the valve actuator 22 in certain aspects. In particular, only a single electrical driving unit for the valve actuator 22 is needed (as compared to the valve actuator 1, shown in Fig. 1). Since electronics, capable of controlling large currents is still quite expensive, this can be of a particular advantage. Apart from this, the valve actuator 22 and the valve actuator 1 of Fig. 1 show several similarities. Therefore, identical reference numbers have been used for similar parts.

In Fig. 2a, the axially movable driving disc 11 is in its lower position (influenced by the reopening spring 14). Also, the axially movable loading disc 12 of the loading section 3 is in its lower position (as influenced by the energy storage spring 4).

Now the single electrical coil 23 will be energized (i.e. an electric voltage is supplied to the single electrical coil 23), thus moving the loading disc 12 from its lower position to its upper, latched position. During it's upwards movement, the volume of the cavity 24, which is defined by a projection 25 of the loading disc 12 will decrease in size. Hydraulic oil, which is entrapped in this cavity 24, will therefore be pushed out through latch check valve 26, provided within the valve actuator 22. The hydraulic oil can be returned to a low pressure fluid reservoir 17, for example.

Due to the energization of the single electrical coil 23, the state shown in Fig. 2b, will eventually be reached. Once again, to hold the two discs 11,12 in their latched positions, a relatively low electric current can be applied to the single electrical coil 23.

If the electric current through the single electrical coil 23 will be switched off, the loading disc 12 will remain in its latched position, despite the missing magnetic field. This is due to the cavity 24 and the latch check valve 26: A downward movement of the loading disc 12 would require an influx of hydraulic oil into the cavity 24, which is not (yet) possible.

The driving disc 11, however, will be pushed upwards under the influence of the force, generated by the energy storage spring 4. This movement is not hindered by the cavity 24. Furthermore, the driving disc 11 is connected to a pin-like extension, forming a release spool 28 of a release spool valve 27. The release spool valve 27 will establish a fluid connection between a fluid port 29 on the outside of the valve actuator 22, and the cavity 24 within the valve actuator 22. This situation is shown in Fig. 2c, where the driving disc 11 has reached its upper position, while the loading disc 12 is still in its latched position.

Due to the now open release spool valve 27, fluid can flow through the fluid port 29 into the cavity 24. The fluid port 29 can be connected to a low pressure fluid reservoir 17, for example. Therefore, the loading disc 12 is now free to leave its latched position and return to its lower position, which is shown in Fig. 2d.

Finally, when the loading disc 12 has reached its lower position, the force, generated by the energy storage spring 4 is not sufficient anymore, to hold the driving disc 11 in its upper position. Therefore, the driving disc 11 will return to its lower position under the influence of a reopening spring 14. Of course, it has to be noted, that fluid forces acting on a poppet head 7 can influence the position of the valve actuator 1 via the poppet head 7 and the valve stem 5.

Finally, the valve actuator 22 will return to its original position, shown in Fig. 2a, thus finishing the actuation cycle.

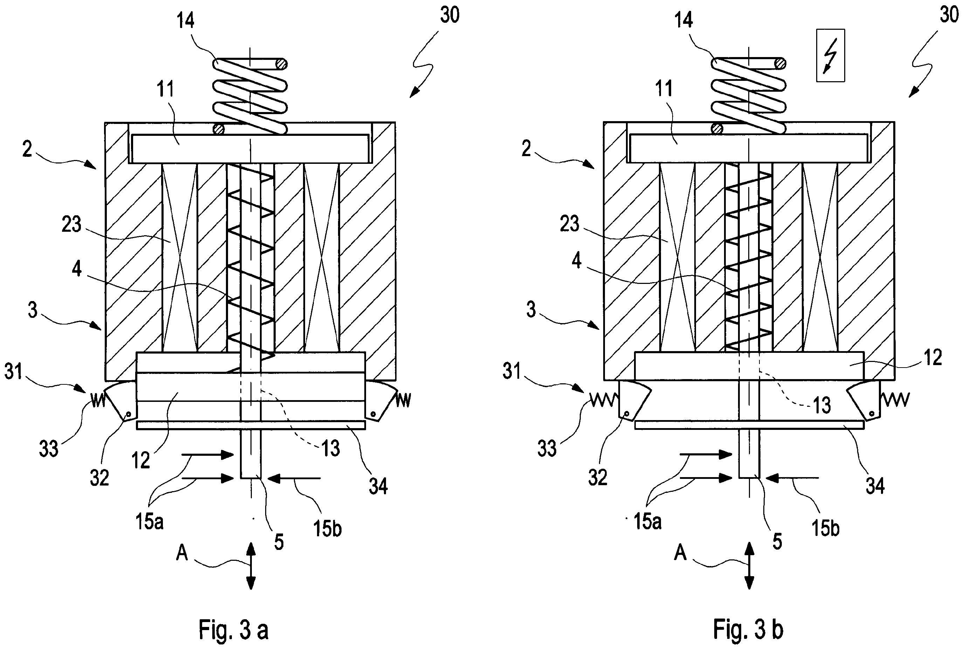

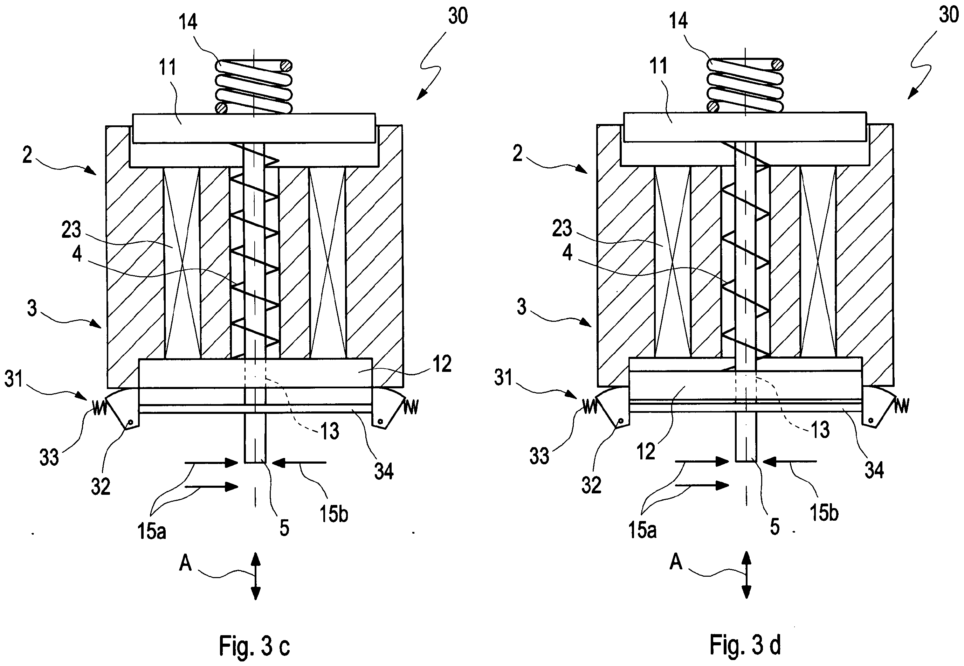

In Fig. 3, another valve actuator 30 is shown. The valve actuator 30 is primarily a modification of the valve actuator 22, shown in Fig. 2. Therefore, similar parts have been indicated with identical reference numbers. Most parts of the valve actuator 30, as well as its working cycle (Fig. 3a through Fig. 3d) are similar to the valve actuator 22 of Fig. 2. However, the latching device 31 for the loading disc 12 is designed in a different way. Here, the latching is preformed by a pair of toggles 32 (of course, a different number of toggles 32 can be used as well). The toggles 32 are pushed into an inwardly directed, latching position (see Fig. 3b) under the influence of biasing springs 33. The opening movement of the toggles 32 is performed by an unlatching disc 34, which is fixedly arranged on the valve stem 5 of the valve actuator 30. The unlatching effect of the unlatching disc 34 can be seen in Fig. 3c.

In Fig. 4, another design of a valve actuator 35 is shown in a schematic illustration. In valve actuator 35, particularly the loading section 36 is designed differently from the loading sections 3 of the valve actuators 1, 22, 30 shown in Figs. 1, 2 and 3. Apart from this, the driving section 2, comprising the driving electrical coil 9 and the axially movable driving disc 11, fixedly connected to the valve stem 5, is similar to the driving section 2 of the valve actuator 1, shown in Fig. 1. For brevity, similar parts are indicated by identical reference numbers.

Furthermore, the valve actuator 35, shown in Fig. 4, is connected to a fluid influencing part 6, comprising a poppet valve 8 with a poppet head 7 that can be moved in an axial direction A in a way that the poppet head 7 can either contact valve seat 37 (thus closing the poppet valve 8), or that it can be placed distant from the valve seat 37, thus opening the poppet valve 8.

Of course, it is to be understood that the fluid influencing part 6 can be connected to any of the described valve actuators 1, 22, 29, 35 and/or that the presently shown valve actuator 35 (or any of the described valve actuators 1, 22, 29, 35) can be connected to a fluid working machine 16, as shown in Fig. 6.

In the presently shown embodiment of the valve actuator 35, the loading disc 38, which is contacting the energy storage spring 4 (which itself contacts the driving disc 11 of the driving section 2) is driven by hydraulic fluid forces. Therefore, the driving section 36 further comprises a fluid cavity 39, which is fluidly connected to a control fluid port 40 via fluid channel 41. By either feeding hydraulic fluid into the fluid cavity 39 or by releasing hydraulic fluid out of the fluid cavity 39, the position of the loading disc 38 can be changed, thus loading and unloading the energy storage spring 4.

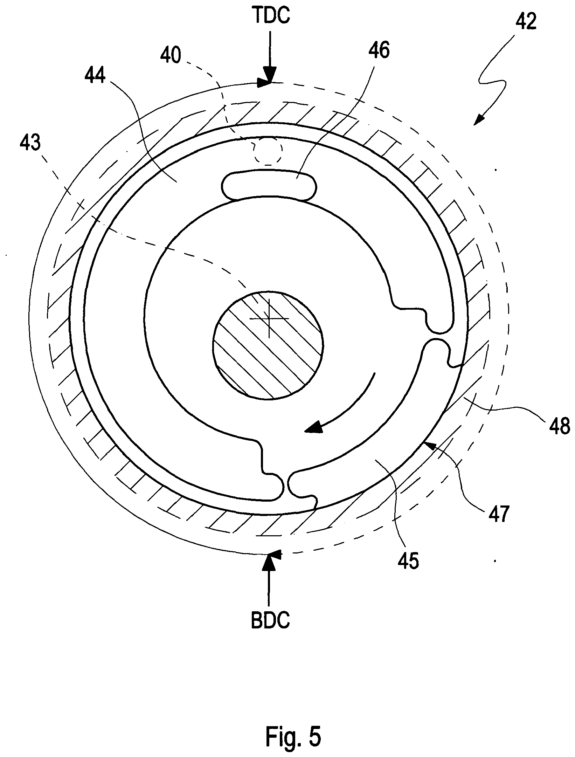

The control of the hydraulic fluid, entering the fluid cavity 39 via control fluid port 40 and fluid channel 41, can be performed by a commutator disc 42, as schematically drawn in Fig. 5. The commutator disc 42 can be mechanically connected to the crankshaft 20 of a synthetically commutated hydraulic machine 16 (see Fig. 6) in a way that it is moving off-axis of a turning axis 43 together with the camshaft 20. In Fig. 5, the commutator disc 42 is drawn in the top dead center position of the piston 19 of the synthetically commutated hydraulic machine 16. The commutator disc 42 is provided with two internal chambers 44 and 45, namely a charging chamber 44 and a releasing chamber 45. Depending on the angular position of the commutator disc 42, the control fluid port 40 is either connected to the charging chamber 44 or the releasing chamber 45 of the commutator disc 42.

The charging chamber 44 of the commutator disc 42 has an extension (in particular a radial extension), so that a pilot fluid port 46, connected to a increased pressure reservoir, is also fluidly connected to the charging chamber 44. Therefore, an elevated fluid pressure will be transmitted from the pilot fluid port 46 to the fluid cavity 39 via charging chamber 44, control fluid port 40 and fluid channel 41. Another possible solution to the commutator disc can be achieved, if pilot valves are used to apply hydraulic preload pressure to the control port of the valve during the time interval the control unit might want to fire (close) the valve. Also mechanically preloading with e.g. a cam mechanism is possible as yet another possibility.

The dimensions of the releasing chamber 45 (in particular its radial dimension) is chosen in a way that control fluid port 40 will be connected to the open "outside" via the outside opening 47, if the commutator disc 42 is in an angular position in which the control fluid port fluidly connects to the releasing chamber 45. By the word "outside", in particular the crankshaft case 48 of the crankshaft 20 of the synthetically commutated hydraulic machine 16 is meant. Such a crankshaft case 48 is usually connected to a low pressure fluid reservoir 17 since the crankshaft case 48 collects leakage oil from the pistons 19, for example. As indicated in Fig. 5, the outside opening 47 is designed in a way that essentially no wall is provided between the release chamber 45 and the crankshaft case 48.

In Fig. 6, finally, the application of a valve actuator 1 within a schematically drawn synthetically commutated hydraulic machine 16 is depicted. It has to be understood, however, that for the synthetically commutated hydraulic machine, all of the presented valve actuators 1, 22, 29, 35 can be used. Of course, even more valve actuators, in particular valve actuators, which are modifications from the presently presented valve actuators 1, 22, 29, 35 can be used for this purpose.
Additional information can be taken from the application, filed on the very same day by the same applicant under the internal reference number SAD08002PEP and which has been published as EP 2 206 941 A1.

| | | | |
|---|---|---|---|
| 1. | Valve actuator | 24. | Cavity |
| 2. | Driving section | 25. | Projection |
| 3. | Loading section | 26. | Latch check valve |
| 4. | Energy storage spring | 27. | Release spool valve |
| 5. | Valve stem | 28. | Release spool |
| 6. | Fluid influencing part | 29. | Fluid port |
| 7. | Poppet head | 30. | Valve actuator |
| 8. | Poppet valve | 31. | Latching device |
| 9. | Driving electrical coil | 32. | Toggles |
| 10. | Loading electrical coil | 33. | Biasing springs |
| 11. | Driving actual movable disc | 34. | Unlatching disc |
| 12. | Loading actually movable disc | 35. | Valve actuator |
| | | 36. | Driving sectiori |
| 13. | Hole | 37. | Valve seat |
| 14. | Reopening spring | 38. | Loading disc |
| 15. | Position arrows | 39. | Fluid cavity |
| 16. | Synthetically commutated hydraulic machine | 40. | Control fluid port |
| | | 41. | Fluid channel |
| 17. | Low pressure fluid reservoir | 42. | Commutator disc |
| 18. | Pumping chamber | 43. | Turning axis |
| 19. | Piston | 44. | Charging chamber |
| 20. | Crankshaft | 45. | Releasing chamber |
| 21. | Actuated valve | 46. | Pilot fluid port |
| 22. | Valve actuator | 47. | Outside opening |
| 23. | Single electrical coil | 48. | Crankshaft case |

## Claims

1. Valve actuator (1, 22, 29, 35), comprising at least one driving means (2, 3, 4, 14, 36) for driving a valve (8) to be actuated by said valve actuator (1, 22, 29, 35), at least one triggering unit (2, 3, 27, 32) for triggering a movement of said driving means (2, 3, 4, 14, 36) to open and/or to close said valve (8), wherein said triggering unit (2, 3, 27, 32) is a directly driven triggering unit (2, 3, 27, 32), converting an input signal directly into a triggering signal of said triggering unit (2, 3, 27, 32) to generate a force that directly triggers a movement of said driving means (2, 3, 4, 14, 36), and wherein at least one mechanical energy storing unit (4, 14) is provided for actuating said triggering unit (2, 3, 27, 32) and/or said driving means (2, 3, 4, 14, 36), **characterised by** at least one preloading means (9, 10, 23) for preloading said mechanical energy storing unit (4, 14), wherein said preloading means (9, 10, 23) and said driving means (2, 3, 4, 14, 36) are separate components.

2. Valve actuator (1, 22, 29, 35) according to claim 1, **characterised in that** said triggering unit (2, 3, 27, 32) comprises at least one magnetic field generating means (9, 10, 23), in particular a magnetic coil (9, 10, 23).

3. Valve actuator (1, 22, 29, 35) according to any of the preceding claims, **characterised in that** said triggering unit (2, 3, 27, 32) comprises a plurality of magnetic field generating means (9, 10, 23), in particular at least one triggering magnetic field generating means (9, 10, 23) for triggering the movement of said driving means (2, 3, 4, 14, 36) and/or at least one loading magnetic field generating means (10, 23) for preloading said mechanical energy storage unit (4, 14).

4. Valve actuator (1, 22, 29, 35) according to any of the preceding claims, **characterised in that** said mechanical energy storing unit (4, 14) comprises at least one device, taken from the group containing springs (4, 14), metal springs (4, 14), elastic material, rubber, hydraulic energy storage devices and gas pressure elements.

5. Valve actuator (1, 22, 29, 35) according to any of the preceding claims, **characterised in that** at least one dampening means (4, 14, 24, 36), in particular at least one dampening spring (4, 14) is provided.

6. Valve actuator (1, 22, 29, 35) according to any of the preceding claims, **characterised in that** at least one additional force generating means (9, 10, 23, 36) is provided, for generating an additional force for said triggering unit (2, 3, 27, 32), said driving means (9, 10, 36) and/or said mechanical energy storing unit (4, 14).

7. Valve actuator (1, 22, 29, 35) according to claim 6, **characterised in that** at least one of said additional force generating means (9, 10, 23, 36) is using, at least in part, pressurized fluids (41) and/or magnetic fields (9, 10, 23) for generating said additional force.

8. Valve actuator (1, 22, 29, 35) according to claim 6 or 7, **characterised in that** at least one of said additional force generating means (9, 10, 23, 36) comprises at least one controlling means (34, 42), which is controlled, at least in part, by the movement and/or actuation of said triggering unit (2, 3, 4, 14, 23), said driving means (9, 10), said preloading means (9, 10, 23) and/or said mechanical energy storing unit (4, 14).

9. Valve actuator (1, 22, 29, 35) according to claim 8, **characterized in that** said controlling means (34, 42) comprises at least one device, taken from the group containing mechanical latching devices (32, 34), fluid pressure applying devices (36) and/or electricity controlling devices.

10. Valve actuator (1, 22, 29, 35) according to any of the preceding claims, **characterized in that** said additional force generating means (2, 3, 4, 14, 23, 36) and/or said mechanical energy storing unit (4, 14) is designed as a periodical force generating means, a cyclically operating force generating means, a periodical mechanical energy storing unit and/or a cyclically operating mechanical energy storing unit.

11. Valve unit (21), in particular valve unit (21) for a hydraulic working machine (16), **characterised by** at least one valve actuator (1, 22, 29, 35) according to any of claims 1 to 10.

12. Fluid working machine (16), **characterised by** at least one valve actuator (1, 22, 29, 35) according to any of claims 1 to 10 and/or at least one valve unit (21) according to claim 11.

13. Fluid working machine (16) according to claim 12, **characterised in that** said fluid working machine (16) is at least partially designed as a hydraulic working machine, preferably as a synthetically commutated hydraulic machine.

## Patentansprüche

1. Ventilaktuator (1, 22, 29, 35), aufweisend zumindest eine Antriebseinrichtung (2, 3, 4, 14, 36) zum Antreiben eines durch den Ventilaktuator (1, 22, 29, 35) anzusteuernden Ventils (8), zumindest eine Triggereinheit (2, 3, 27, 32) zur Triggerung einer Bewegung der Antriebseinrichtung (2, 3, 4, 14, 36) um das Ventil (8) zu öffnen und/oder zu schließen, wobei die Triggereinheit (2, 3, 27, 32) eine direkt angetriebene Triggereinheit (2, 3, 27, 32) ist, die ein Eingangssignal direkt in ein Triggersignal der Triggereinheit (2, 3, 27, 32) umwandelt, um eine Kraft zu erzeugen, die direkt eine Bewegung der Antriebseinrichtung (2, 3, 4, 14, 36) triggert, und wobei zumindest eine mechanische Energiespeichereinheit (4,14) zur Ansteuerung der Triggereinheit (2, 3, 27, 32) und/oder der Antriebseinrichtung (2, 3, 4, 14, 36) vorgesehen ist, **gekennzeichnet durch** zumindest eine Vorspanneinrichtung (9, 10, 23) zum Vorspannen der mechanischen Energiespeichereinheit (4, 14), wobei die Vorspanneinrichtung (9, 10, 23) und die Antriebseinrichtung (2, 3, 4, 14, 36) voneinander separate Komponenten sind.

2. Ventilaktuator (1, 22, 29, 35) nach Anspruch 1, **dadurch gekennzeichnet, dass** die Triggereinheit (2, 3, 27, 32) zumindest eine Magnetfelderzeugungseinrichtung (9, 10, 23) aufweist, insbesondere eine Magnetspule (9, 10, 23).

3. Ventilaktuator (1, 22, 29, 35) nach einem der vorangehenden Ansprüche, **dadurch gekennzeichnet, dass** die Triggereinheit (2, 3, 27, 32) eine Mehrzahl von Magnetfelderzeugungseinrichtungen (9, 10, 23) aufweist, insbesondere zumindest eine triggernde Magnetfelderzeugungseinrichtung (9, 10, 32) zur Triggerung der Bewegung der Antriebseinrichtung (2, 3, 4, 14, 36) und/oder zumindest einer vorspannungseinbringenden Magnetfelderzeugungsvorrichtung (10, 23) zum Vorspannen der mechanischen Energiespeichereinheit (4, 14).

4. Ventilaktuator (1, 22, 29, 35) nach einem der vorangehenden Ansprüche, **dadurch gekennzeichnet, dass** die mechanische Energiespeichereinheit (4, 14) zumindest eine Einrichtung aufweist, die der Gruppe entnommen ist, welche Federn (4, 14), Metallfedern (4, 14), elastische Materialien, Gummi, Hydraulikenergiespeichereinrichtungen und Gasdruckelemente umfasst.

5. Ventilaktuator (1, 22, 29, 35) nach einem der vorangehenden Ansprüche, **dadurch gekennzeichnet, dass** zumindest eine Dämpfungseinrichtung (4, 14, 24, 36) vorgesehen ist, insbesondere zumindest eine Dämpfungsfeder (4, 14).

6. Ventilaktuator (1, 22, 29, 35) nach einem der vorangehenden Ansprüche, **dadurch gekennzeichnet, dass** zumindest eine zusätzliche Krafterzeugungseinrichtung (9, 10, 23, 36) vorgesehen ist, um für die Triggereinheit (2, 3, 27, 32), die Antriebseinrichtung (9, 10, 36) und/oder die mechanische Energiespeichereinheit (4, 14) eine zusätzliche Kraft zur Verfügung zu stellen.

7. Ventilaktuator (1, 22, 29, 35) nach Anspruch 6, **dadurch gekennzeichnet, dass** zumindest eine der zusätzlichen Krafterzeugungseinrichtungen (9, 10, 23, 36) zumindest teilweise unter Druck gesetzte Fluide (41) und/oder Magnetfelder (9, 10, 23) verwendet, um die zusätzliche Kraft zu erzeugen.

8. Ventilaktuator (1, 22, 29, 35) nach Anspruch 6 oder 7, **dadurch gekennzeichnet, dass** zumindest eine der zusätzlichen Krafterzeugungseinrichtungen (9, 10, 23, 36) zumindest eine Steuereinrichtung (34, 42) aufweist, welche zumindest teilweise durch die Bewegung und/oder die Ansteuerung der Triggereinheit (2, 3, 4, 14, 23), der Antriebseinheit (9, 10), der Vorspanneinrichtung (9, 10, 23) und/oder der mechanischen Energiespeichereinheit (4, 14) gesteuert wird.

9. Ventilaktuator (1, 22, 29, 35) nach Anspruch 8, **dadurch gekennzeichnet, dass** die Steuereinrichtung (34, 42) zumindest eine Einrichtung aufweist, welche der Gruppe entnommen ist, die mechanische Verriegelungseinrichtungen (32, 34), Fluiddruckbeaufschlagungseinrichtungen (36) und/oder elektrische Steuereinrichtungen umfasst.

10. Ventilaktuator (1, 22, 29, 35) nach einem der vorangehenden Ansprüche, **dadurch gekennzeichnet, dass** die zusätzliche Krafterzeugungseinrichtung (2, 3, 4, 14, 23, 36) und/oder die mechanische Energiespeichereinheit (4, 14) als periodische Krafterzeugungseinrichtung, als zyklisch arbeitende Krafterzeugungseinrichtung, als periodisch arbeitende mechanische Energiespeichereinheit und/oder als zyklisch arbeitende mechanische Energiespeichereinheit ausgebildet ist.

11. Ventileinheit (21), insbesondere Ventileinheit (21) für eine Hydraulikarbeitsmaschine (16), **gekennzeichnet durch** zumindest einen Ventilaktuator (1, 22, 29, 35) nach einem der Ansprüche 1 bis 10.

12. Fluidarbeitsmaschine (16), **gekennzeichnet durch** zumindest einen Ventilaktuator (1, 22, 29, 35) nach einem der Ansprüche 1 bis 10 und/oder zumindest eine Ventileinheit (21) nach Anspruch 11.

13. Fluidarbeitsmaschine (16) nach Anspruch 12, **dadurch gekennzeichnet, dass** die Fluidarbeitsmaschine (16) zumindest teilweise als Hydraulikarbeitsmaschine, bevorzugt als synthetisch angesteuerte Hydraulikmaschine (synthetically commutated hydraulic machine), ausgebildet ist.

## Revendications

1. Actionneur à valve (1, 22, 29, 35) comportant au moins un moyen d'entrainement (2, 3, 4, 14, 36) pour entrainer une valve (8) devant être actionnée par ledit actionneur à valve (1, 22, 29, 35), au moins une unité de déclenchement (2, 3, 27, 32) pour déclencher un mouvement dudit moyen d'entrainement (2, 3, 4, 14, 36) pour ouvrir et/ou fermer ladite valve (8), dans lequel ladite unité de déclenchement (2, 3, 27, 32) est une unité de déclenchement à entrainement direct (2, 3, 27, 32) qui convertit un signal d'entrée directement en un signal de déclenchement de ladite unité de déclenchement (2, 3, 27, 32) pour générer une force qui déclenche directement un mouvement dudit moyen d'entrainement (2, 3, 4, 14, 36), et dans lequel au moins une unité de stockage d'énergie mécanique (4, 14) est prévue, pour actionner ladite unité de déclenchement (2, 3, 27, 32) et/ou ledit moyen d'entrainement (2, 3, 4, 14, 36),
**caractérisé par** au moins un moyen de précontrainte (9, 10, 23) pour précontraindre ladite unité de stockage d'énergie mécanique (4, 14), dans lequel ledit moyen de précontrainte (9, 10, 23) et ledit moyen d'entrainement (2, 3, 4, 14, 36) sont des composants distincts.

2. Actionneur à valve (1, 22, 29, 35) selon la revendication 1, **caractérisé en ce que** l'unité de déclenchement (2, 3, 27, 32) comporte au moins un moyen de génération de champ magnétique (9, 10, 23), en particulier une bobine magnétique (9, 10, 23).

3. Actionneur à valve (1, 22, 29, 35) selon l'une quelconque des revendications précédentes, **caractérisé en ce que** ladite unité de déclenchement (2, 3, 27, 32) comporte une pluralité de moyens de génération de champ magnétique (9, 10, 23), en particulier au moins un moyen de génération de champ magnétique (9, 10, 23) de déclenchement pour déclencher le mouvement dudit moyen d'entrainement (2, 3, 4, 14, 36) et/ou au moins un moyen de génération de champ magnétique (10, 23) de charge pour précharger ladite unité de stockage d'énergie mécanique (4, 14).

4. Actionneur à valve (1, 22, 29, 35) selon l'une quelconque des revendications précédentes, **caractérisé en ce que** ladite unité de stockage d'énergie mécanique (4, 14) comporte au moins un dispositif choisi dans le groupe contenant les ressorts (4, 14), les ressorts métalliques (4, 14), un matériau élastique, la gomme, les dispositifs de stockage d'énergie hydraulique et les éléments à pression gazeuse.

5. Actionneur à valve (1, 22, 29, 35) selon l'une quelconque des revendications précédentes, **caractérisé en ce qu'**au moins un moyen d'amortissement (4, 14, 24, 36), en particulier au moins un ressort d'amortissement (4, 14) est prévu.

6. Actionneur à valve (1, 22, 29, 35) selon l'une quelconque des revendications précédentes, **caractérisé en ce qu'**au moins un moyen additionnel de génération de force (9, 10, 23, 36) est prévu, pour générer une force additionnelle pour ladite unité de déclenchement (2, 3, 27, 32), ledit moyen d'entrainement (9, 10, 36) et/ou ladite unité de stockage d'énergie mécanique (4, 14).

7. Actionneur à valve (1, 22, 29, 35) selon la revendication 6, **caractérisé en ce qu'**au moins un des moyens additionnels de génération de force (9, 10, 23, 36) utilise, au moins partiellement, des fluides pressurisés (41) et/ou des champs magnétiques (9, 10, 23) pour générer ladite force additionnelle.

8. Actionneur à valve (1, 22, 29, 35) selon l'une des revendications 6 ou 7, **caractérisé en ce qu'**au moins un des moyens additionnels de génération de force (9, 10, 23, 36) comporte au moins un moyen de contrôle (34, 42) qui est contrôlé, au moins en partie, par le mouvement et/ou l'actionnement de la dite unité de déclenchement (2, 3, 4, 14, 23), ledit moyen d'entrainement (9, 10), ledit moyen de précontrainte (9, 10, 23) et/ou ladite unité de stockage d'énergie mécanique (4, 14).

9. Actionneur à valve (1, 22, 29, 35) selon la revendication 8 **caractérisé en ce que** ledit moyen de contrôle (34, 42) comporte au moins un dispositif choisi dans le groupe contenant les dispositifs de verrouillage mécanique (32, 34), les dispositifs d'application de pression par fluide (36) et/ou les dispositifs de contrôle électrique.

10. Actionneur à valve (1, 22, 29, 35) selon l'une quelconque des revendications précédentes, **caractérisé en ce que** ledit moyen additionnel de génération de force (2, 3, 4, 14, 23, 36) et/ou ladite unité de stockage d'énergie mécanique (4, 14) est configurée pour former moyen de génération de force périodique, moyen de génération de force opérant cycliquement, unité de stockage d'énergie mécanique périodique et/ou unité de stockage d'énergie mécanique opérant cycliquement.

11. Unité de valve (21), en particulier unité de valve (21) pour une machine fonctionnant hydrauliquement, **caractérisée par** au moins un actionneur à valve (1, 22, 29, 35) selon l'une des revendications 1 à 10.

12. Machine de travail à fluide (16) **caractérisée par** au moins un actionneur à valve (1, 22, 29, 35) selon l'une des revendications 1 à 10 et/ou au moins une unité de valve (21) selon la revendication 11.

13. Machine de travail à fluide (16) selon la revendication 12, **caractérisée en ce que** ladite machine de travail à fluide (16) est au moins partiellement configurée comme machine de travail hydraulique, préférentiellement comme une machine hydraulique commutée synthétiquement.
